(19) Europäisches Patentamt
European Patent Office
Office européen des brevets

(11) EP 2 038 316 B1

# (12) EUROPEAN PATENT SPECIFICATION

(45) Date of publication and mention of the grant of the patent:
**30.12.2009 Bulletin 2009/53**

(21) Application number: **07765082.8**

(22) Date of filing: **05.07.2007**

(51) Int Cl.:
***C08F 265/04*** *(2006.01)* ***C08F 299/04*** *(2006.01)*

(86) International application number:
**PCT/EP2007/005961**

(87) International publication number:
**WO 2008/003496 (10.01.2008 Gazette 2008/02)**

## (54) UNSATURATED POLYESTER RESIN OR VINYL ESTER RESIN COMPOSITIONS

UNGESÄTTIGTES POLYESTERHARZ ODER VINYLESTERHARZ ENTHALTENDE ZUSAMMENSETZUNGEN

COMPOSITIONS DE RÉSINE DE POLYESTER INSATURÉ OU DE RÉSINE D'ESTER VINYLIQUE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **06.07.2006 EP 06014011**

(43) Date of publication of application:
**25.03.2009 Bulletin 2009/13**

(73) Proprietor: **DSM IP Assets B.V.**
**6411 TE Heerlen (NL)**

(72) Inventors:
- **JANSEN, Johan, Franz, Gradus, Antonius**
  **6165 AP Geleen (NL)**
- **KRAEGER, Ronald, Ivo.**
  **3742 PJ Baarn (NL)**

(74) Representative: **Verhaegen, Ilse Maria M. et al**
**DSM Intellectual Property**
**Office Geleen**
**P.O. Box 9**
**6160 MA Geleen (NL)**

(56) References cited:
**WO-A-2005/047379** **WO-A2-03/101918**
**US-A- 5 235 010**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 038 316 B1

## Description

The present invention relates to two-component composition comprising a first component and a second component; the first component comprising an unsaturated polyester resin or vinyl ester resin and the second component comprising a peroxide compound having formula ROOH, in which R is hydrogen or an optionally substituted alkyl group. In particular, the present invention relates to two-component unsaturated polyester resin or vinyl ester resin compositions for structural parts.

The present invention further also relates to objects and structural parts prepared from such two-component compositions. The present invention finally also relates to a process for curing such two-component compositions.

As meant herein, objects and structural parts are considered to have a thickness of at least 0,5 mm and appropriate mechanical properties. The term "objects and structural parts" as meant herein also includes cured resin compositions as are used in the field of chemical anchoring, construction, roofing, flooring, windmill blades, containers, tanks, pipes, automotive parts, boats, etc.

As used herein, the term "two-component system" refers to systems where two separate components (A and B) are being spatially separated from each other, for instance in separate cartridges or the like, and is intended to include any system wherein each of such two separate components (A and B) may contain further separate components. The components are combined at the time the system is used.

In the curing of unsaturated polyester resins and vinyl ester resins, classes of resins that can generally be cured under the influence of peroxides, gel time is a very important characteristic of the curing properties. In addition also the time from reaching the gel time to reaching peak temperature, and the level of the peak temperature (higher peak temperature generally results in better curing) are important. Apart from that, of course, also the mechanical properties of the objects and/or structural parts obtained in the curing process are important. As meant herein gel time represents the time lapsed in the curing phase of the resin to increase in temperature from 25 °C to 35 °C. Normally this corresponds to the time the fluidity (or viscosity) of the resin is still in a range where the resin can be handled easily. In closed mould operations, for instance, this time period is very important to be known. Accordingly, the term good curing properties reflects, amongst other things, that the resin composition has suitable gel-time properties: i.e. the resin to be cured should remain sufficiently fluid for an acceptable time in the first stage of curing. For good curing properties it is important, that the gel time is rather short, i.e. in the order of some minutes to few tens of minutes. For reasons of process efficiency and results to be achieved, the skilled man accordingly will always try to find options to achieve a minimal gel time, while retaining good mechanical properties of the ultimately cured products. In addition, the skilled man also will try to find curable resin compositions having good storage stability, i.e. being stable (i.e. remain their handling properties without gellification) before being subjected to curing for at least one week after manufacture of the resin composition.

The styrene content in the objects obtained after curing the resin composition is an important factor in the determination how efficient a cure system is. Preferable the residual amount of styrene after cure is as low as possible as this implies that the curing is very efficient. Furthermore, low residual amount of styrene results in lower styrene emission which is advantageous from an environmental point of view. Post-curing is often applied for small objects in order to reduce styrene content in small objects. Post-curing is generally effected by storing the object at elevated temperature, for example at 80°C, for at least 24 hours.

Moreover, for environmental reasons, the presence of cobalt in resin compositions is less preferred.

W. D. Cook et al. in Polym. Int. Vol.50, 2001, at pages 129-134 describe in an interesting article various aspects of control of gel time and exotherm behavior during cure of unsaturated polyester resins. They also demonstrate how the exotherm behavior during cure of such resins can be followed.

As meant herein the term gel-time drift (for a specifically selected period of time, for instance 30 or 60 days) reflects the phenomenon, that - when curing is performed at another point of time than at the reference standard moment for curing, for instance 24 hours after preparation of the resin - the gel time observed is different from that at the point of reference. For unsaturated polyester resins and vinyl ester resins, as can generally be cured under the influence of peroxides, gel time represents the time lapsed in the curing phase of the resin to increase in temperature from 25 °C to 35 °C. Normally this corresponds to the time the fluidity (or viscosity) of the resin is still in a range where the resin can be handled easily. In closed mould operations, for instance, this time period is very important to be known. The lower the gel-time drift is, the better predictable the behavior of the resin (and the resulting properties of the cured material) will be.

Gel time drift (hereinafter: "Gtd") can be expressed in a formula as follows:

$$Gtd = (T_{25\text{->}35°C \text{ at y-days}} - T_{25\text{-}35°C \text{ after mixing}}) / T_{25\text{->}35°C \text{ after mixing}} \times 100\% \qquad \text{(formula 1)}$$

In this formula $T_{25\text{->}35°C}$ (which also might be represented by $T_{gel}$) represents, as mentioned above, the time lapsed in the curing phase of the resin to increase in temperature from 25 °C to 35 °C. The additional reference to "at

y days" shows after how many days of preparing the resin the curing is effected.

All polyester resins, by their nature, undergo some changes over time from their production till their actual curing. One of the characteristics where such changes become visible is the gel-time drift. The state of the art unsaturated polyester resin or vinyl ester resin systems generally are being cured by means of initiation systems. In general, such unsaturated polyester resin or vinyl ester resin systems are cured under the influence of peroxides and are accelerated (often even pre-accelerated) by the presence of metal compounds, especially cobalt salts, as accelerators. Cobalt naphthenate and cobalt octanoate are the most widely used accelerators. In addition to accelerators, the polyester resins usually also contain radical inhibitors for ensuring that the resin systems do not gellify prematurely (i.e. that they have a good storage stability). Furthermore, radical inhibitors are being used to ensure that the resin systems have an appropriate gel time and/or for adjusting the gel-time value of the resin system to an even more suitable value.

Most commonly, in the state of the art, polymerization initiation of unsaturated polyester resins, etc. by redox reactions involving peroxides, is accelerated or pre-accelerated by a cobalt compound in combination with another accelerator.

An excellent review article of M. Malik et al. in J.M.S. - Rev. Macromol. Chem. Phys., C40 (2&3), p.139-165 (2000) gives a good overview of the current status of resin systems.

The phenomenon of gel-time drift, indeed, so far got quite little attention in the literature. Most attention so far has been given in literature to aspects of acceleration of gel time in general, and to improving of pot-life or shelf life of resins. The latter aspects, however, are not necessarily correlated to aspects of gel-time drift, and so, the literature until now gives very little suggestions as to possible solutions for improvement of (i.e. lowering of) gel-time drift.

Accordingly, for the unsaturated polyester resins and vinyl ester resins as are part of the current state of the art there is still need for finding new accelerator combinations for resin systems which can be cured with hydroperoxides as 2$^{nd}$ component. Moreover, for environmental reasons, the presence of cobalt in the resins is less preferred.

The present inventors now, surprisingly, found that cured objects with a low rest styrene content can be obtained even without post-curing by the use of a two-component composition comprising a first component A and a second component B, wherein the first component being a resin composition comprising an unsaturated polyester resin or vinyl ester resin, a manganese compound and a thiol-containing compound, the molar ratio between the manganese and the thiol groups of the thiol-containing compound is from 4:1 to 1:1500; and the second component comprises a peroxide compound having formula ROOH, in which R is hydrogen or an optionally substituted alkyl group. Moreover also low residual amounts of benzaldehyde can be obtained. Furthermore, the objects can be obtained colourless and tack-free. In addition, the two-component composition can be formulated with only slight gel-time drift tendency.

US-A-5235010 discloses an accelerator composition for the curing of unsaturated polyester resins comprising a complex of at least two salts of at least two different metals selected from the group consisting of lithium, magnesium, manganese, copper, cobalt, vanadium and iron, and an organic oxygen-containing compound capable of forming a metal complex with said metal salt including at least one functional group selected from the group consisting of an aldehyde, ketone, ether, ester or alcohol group. The curing is effected using conventional peroxide initiators known for use with unsaturated polyesters, such as for example methyl ethyl ketone peroxide or acetylacetone peroxide. Further, other materials including thiols and nitrogen-containing compounds may be present during the curing process. In Example 12 an unsaturated polyester resins is cured with methyl ethyl ketone peroxide or acetylacetone peroxide in the presence of an accelerator composition comprising manganese acetate, lithium chloride, diethyleneglycol, acetylacetone and a thiol adduct. There is no indication in this reference that acceleration can also be achieved with a manganese compound and a thiol-containing compound in the absence of lithium chloride. On the contrary, this reference teaches that adding manganese acetate (example 12) to an accelerator comprising lithium chloride and a thiol (example 11) results in an increased gel time, i.e. that Mn acts as a retarder.

US-A-4429092 describes curing of vinyl ester resins in the presence of copper and tin polymerization promoters, a primary mercaptan chain transfer agent and peroxyester. In the experimental part, the use of manganese acetate (table 4) instead of copper and tin results in no curing at all.

The unsaturated polyester resin or vinyl ester resin as is comprised in the two-component compositions according to the present invention, may suitably be selected from the unsaturated polyester resins or vinyl ester resin as are known to the skilled man. Examples of suitable unsaturated polyester or vinyl ester resins to be used in the present invention are, subdivided in the categories as classified by Malik et al., cited above.

(1) Ortho-resins: these are based on phthalic anhydride, maleic anhydride, or fumaric acid and glycols, such as 1,2-propylene glycol, ethylene glycol, diethylene glycol, triethylene glycol, 1,3-propylene glycol, dipropylene glycol, tripropylene glycol, neopentyl glycol or hydrogenated bisphenol-A. Commonly the ones derived from 1,2-propylene glycol are used in combination with a reactive diluent such as styrene.

(2) Iso-resins: these are prepared from isophthalic acid, maleic anhydride or fumaric acid, and glycols. These resins may contain higher proportions of reactive diluent than the ortho resins.

(3) Bisphenol-A-fumarates: these are based on ethoxylated bisphenol-A and fumaric acid.

(4) Chlorendics: are resins prepared from chlorine/bromine containing anhydrides or phenols in the preparation of the UP resins.

(5) Vinyl ester resins: these are resins, which are mostly used because of their because of their hydrolytic resistance and excellent mechanical properties, as well as for their low styrene emission, are having unsaturated sites only in the terminal position, introduced by reaction of epoxy resins (e.g. diglycidyl ether of bisphenol-A, epoxies of the phenol-novolac type, or epoxies based on tetrabromobisphenol-A) with (meth)acrylic acid. Instead of (meth)acrylic acid also (meth)acrylamide may be used.

Besides these classes of resins also so-called dicyclopentadiene (DCPD) resins can also be distinguished as unsaturated polyester resins.

As used herein, a vinyl ester resin is a (meth)acrylate functional resin. Besides the vinyl ester resins as described in Malik et al., also the class of vinyl ester urethane resins (also referred to urethane methacylate resins) can be distinguished as vinyl ester resins. Preferably, the vinyl ester used in the present invention is a resin obtained by the esterification of an epoxy resin with (meth)acrylic acid or (meth)acrylamide.

All of these resins, as can suitably used in the context of the present invention, may be modified according to methods known to the skilled man, e.g. for achieving lower acid number, hydroxyl number or anhydride number, or for becoming more flexible due to insertion of flexible units in the backbone, etc. The class of DCPD-resins is obtained either by modification of any of the above resin types by Diels-Alder reaction with cyclopentadiene, or they are obtained alternatively by first reacting maleic acid with dicyclopentadiene, followed by the resin manufacture as shown above.

Of course, also other reactive groups curable by reaction with peroxides may be present in the resins, for instance reactive groups derived from itaconic acid, citraconic acid and allylic groups, etc. Accordingly, the unsaturated polyester resins or vinyl ester resins used in the present invention may contain solvents. The solvents may be inert to the resin system or may be reactive therewith during the curing step. Reactive solvents are particularly preferred. Examples of suitable reactive solvents are styrene, $\alpha$-methylstyrene, (meth)acrylates, N-vinylpyrrolidone and N-vinylcaprolactam..

The unsaturated polyester resins and vinyl ester resins as are being used in the context of the present invention may be any type of such resins, but preferably are chosen from the group of DCPD-resins, iso-phthalic resins and ortho-phthalic resins and vinyl ester resins. More detailed examples of resins belonging to such groups of resins have been shown in the foregoing part of the specification. More preferably, the resin is an unsaturated polyester resin preferably chosen from the group of DCPD-resins, iso-phthalic resins and ortho-phthalic resins.

The resin composition of the first component preferably has an acid value in the range of 0,001 - 300 mg KOH/g of resin composition. As used herein, the acid value of the resin composition is determined titrimetrically according to ISO 2114-2000. Preferably, the molecular weight of the unsaturated polyester resin or vinyl ester resin is in the range of from 500 to 200.000 g/mole. As used herein, the molecular weight of the resin is determined using gel permeation chromatography according to ISO 13885-1.

The resin composition generally contains less than 5 wt.% water.

In the context of the invention all kinds of manganese compounds can be used. The manganese compound present in the resin composition is preferably a manganese salt or complex. More preferably, the manganese compound is a manganese$^{2+}$ salt or complex or a manganese$^{3+}$ salt or complex. Even more preferably, the manganese compound is a manganese$^{2+}$ salt or manganese$^{3+}$ salt. The manganese$^{2+}$ salt is preferably an organic manganese$^{2+}$ salt. The manganese$^{3+}$ salt is preferably an organic manganese$^{3+}$ salt. The organic manganese$^{2+}$ salt or the organic manganese$^{3+}$ salt is preferably a manganese carboxylate or a manganese acetoacetate. It will be clear that, instead of a single manganese compound also a mixture of manganese compounds can be used.

The manganese compound is preferably present in the resin composition in an amount of at least 0,05 mmol manganese per kg of primary resin system. The upper limit of the manganese content is not very critical, although for reasons of cost efficiency of course no extremely high concentrations will be applied. Generally the concentration of the manganese compound in the primary resin system will be lower than 30 mmol manganese per kg of primary resin system.

For understanding of the invention, and for proper assessment of the amounts of manganese compound to be present in the resin composition, the term "primary resin system" as used herein is understood to mean the total weight of the resin, but excluding any fillers as may be used when applying the resin system for its intended uses. The primary resin system therefore consists of the unsaturated polyester resin or vinyl ester resin, any additives present therein (except for the peroxide component that is to be added shortly before the curing) soluble in the resin, such as accelerators, promoters, inhibitors, low-profile agents, colorants (dyes), thixotropic agents, release agents etc., as well as styrene and/or other solvents as may usually be present therein. The amount of additives soluble in the resin usually may be as from 1 to 25 wt.% of the primary resin system; the amount of styrene and/or other solvent may be as large as up to 50 wt.% of the primary resin system. The primary resin system, however, explicitly does not include compounds not being soluble therein, such as fillers (e.g. glass or carbon fibers), talc, clay, solid pigments (such as, for instance, titanium dioxide (titanium white)), flame retardants, e.g. aluminium oxide hydrates, etc.

The thiol in the thiol-containing compound of the resin composition is preferably an aliphatic thiol, more preferably a primary aliphatic thiol. The aliphatic thiol is preferably a α-mercapto acetate or β-mercapto propionate, or a derivative or mixture thereof. The thiol-functionality of the thiol-containing compound in the resin composition is preferably ≥ 2, more preferably ≥ 3.

Preferably, the amount of the thiol-containing compound is from 0,01 to 10 % by weight, calculated on the total weight of the primary resin system of the resin composition. More preferably, the amount of the thiol-containing compound is from 0,1 to 2 % by weight; even more preferably between 0,25% and 1,5% by weight.

In a preferred embodiment of the invention, the resin composition also comprises a base because this results in a more efficient curing, i.e. shorter gel time and/or higher peak temperature.

Preferably, the base is an organic base with $pK_a \geq 10$ or the base is an alkali metal or earth alkali metal compound. More preferably, the base is an alkali metal or earth alkali metal compound. The organic base with $pK_a \geq 10$ is preferably a nitrogen-containing compound, preferably an amine, more preferably a tertiary amine. The alkali metal or earth alkali metal compound is preferably an oxide, hydroxide, carboxylate, carbonate or hydrocarbonate. Preferably, the alkali metal is not lithium and the earth alkali metal is not magnesium in view of the low solubility of lithium and magnesium compounds in the resin composition. Most preferably, the base is a potassium compound. The potassium compound is preferably a potassium carboxylate, preferably a potassium $C_6$-$C_{20}$ carboxylate. In a preferred embodiment of the present invention, the potassium $C_6$-$C_{20}$ carboxylate is in-situ formed by adding potassium hydroxide to the resin composition.

Preferably, the amount of the base is from 0,001 to 2000 mmol/kg of primary resin system. More preferably, the amount of the base is from 0,1 to 200 mmol/kg of primary resin system.

In the resin composition, the molar ratio between the manganese and the basic functionality of the base is preferably from 3:1 to 1:1500, more preferably from 1:1 to 1: 100. The molar ratio between the thiol groups of the thiol-containing compound and the basic functionality of the base is preferably from 55:1 to 1: 40, more preferably from 8:1 to 1:8. The molar ratio between the manganese and the thiol groups of the thiol-containing compound is preferably from 4: 1 to 1:500, more preferably from 1:1 to 1: 40.

In another preferred embodiment of the invention, the resin composition also comprises a 1,3-dioxo compound. It has been found that 1,3-dioxo compounds can further accelerate a curing system comprising a manganese compound and a thiol-containing compound. The 1,3-dioxo compound is preferably a compound having the following formula:

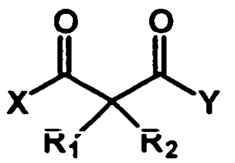

(1)

whereby

X,Y = H, $C_1$-$C_{20}$ alkyl, $C_6$-$C_{20}$ aryl, alkylaryl, arylalkyl, part of a polymer chain, $OR^3$, $NR^3R^4$;

$R^1$, $R^2$, $R^3$, and $R^4$ each individually may represent hydrogen (H), or a $C_1$-$C_{20}$ alkyl, aryl, alkylaryl or arylalkyl group, that each optionally may contain one or more hetero-atoms (e.g. oxygen, phosphor, nitrogen or sulphur atoms) and/or substituents;

a ring may be present between $R^1$ and $R^2$, $R^1$ and $R^3$, and/or between $R^2$ and $R^4$;

$R^3$ and/or $R^4$ may be part of a polymer chain, may be attached to a polymer chain or may contain a polymerizable group. Preferably, X and/or Y are/is $C_1$-$C_{20}$ alkyl and/or $C_1$-$C_{20}$ aryl. More preferably, X and/or Y are/is a methyl group. Preferably, the 1,3-dioxo compound is acetylaceton. The 1,3-dioxo compound may be a polymer or is polymerizable.

Preferably, the amount of the 1,3-dioxo compound is from 0,01 to 10 % by weight, calculated on the total weight of the primary resin system of the resin composition. More preferably, amount of the 1,3-dioxo compound is from 0,2 to 2 % by weight.

In the resin composition, the molar ratio between the manganese and the dioxo compound is preferably from 1:3 to 1:400. The molar ratio between the thiol groups of the thiol-containing compound and the dioxo compound is preferably from 10:1 to 1:10.

The second component (B component) of the two-component system comprises a peroxide compound having formula ROOH, in which R is hydrogen or an optionally substituted alkyl group. The peroxide may be solid or liquid. Examples of suitable peroxides are: tertiary alkyl hydroperoxides (such as, for instance, t-butyl hydroperoxide), other hydroperoxides (such as, for instance, cumene hydroperoxide), the special class of hydroperoxides formed by the group of ketone peroxides (perketones, being an addition product of hydrogen peroxide and a ketone, such as, for instance,

methyl ethyl ketone peroxide, methyl isobutyl ketone peroxide and acetylacetone peroxide). Often the organic peroxides used as curing agent are tertiary hydroperoxides, i.e. peroxy compounds having tertiary carbon atoms directly united to an -OOH group. Clearly also mixtures of these peroxides with other peroxides may be used in the context of the present invention. The peroxides may also be mixed peroxides, i.e. peroxides containing any two of different peroxygen-bearing moieties in one molecule).

Most preferably, however, the peroxide is a liquid hydroperoxide. The liquid hydroperoxide, of course, also may be a mixture of hydroperoxides. Handling of liquid hydroperoxides when curing the resins for their final use is generally easier: they have better mixing properties and dissolve more quickly in the resin to be cured.

In particular it is preferred that the peroxide is selected from the group of ketone peroxides, a special class of hydroperoxides. The peroxide being most preferred in terms of handling properties and economics is methyl ethyl ketone peroxide (MEK peroxide).

In a preferred embodiment of the invention, the resin composition also contains one or more reactive diluents preferably in an amount of at least 5 weight %.

Such reactive diluents are especially relevant for reducing the viscosity of the resin in order to improve the resin handling properties, particularly for being used in techniques like vacuum injection, etc. However, the amount of such reactive diluent in the resin composition is not critical. Preferably, the reactive diluent is a methacrylate and/or styrene.

In a further preferred embodiment of the present invention, the resin composition also contains one or more radical inhibitors.

More preferably, the resin compositions contain one or more radical inhibitors selected from the groups of phenolic compounds like for example phenols, hydroquinones and catechols; stable radicals like galvinoxyl and N-oxyl based compounds; and/or phenothiazines.

The amount of radical inhibitor as used in the context of the present invention, may, however, vary within rather wide ranges, and may be chosen as a first indication of the gel time as is desired to be achieved. Preferably, the amount of phenolic inhibitor is from about 0,001 to 35 mmol per kg of primary resin system, and more preferably it amounts to more than 0,01, most preferably more than 0,1 mmol per kg of primary resin system. The skilled man quite easily can assess, in dependence of the type of inhibitor selected, which amount thereof leads to good results according to the invention.

Suitable examples of radical inhibitors that can be used in the resin compositions according to the invention are, for instance, 2-methoxyphenol, 4-methoxyphenol, 2,6-di-t-butyl-4-methylphenol, 2,6-di-t-butylphenol, 2,4,6-trimethylphenol, 2,4,6-tris-dimethylaminomethyl phenol, 4,4'-thio-bis(3-methyl-6-t-butylphenol), 4,4'-isopropylidene diphenol, 2,4-di-t-butylphenol, 6,6'-di-t-butyl-2,2'-methylene di-p-cresol, hydroquinone, 2-methylhydroquinone, 2-t-butylhydroquinone, 2,5-di-t-butylhydroquinone, 2,6-di-t-butylhydroquinone, 2,6-dimethylhydroquinone , 2,3,5-trimethylhydroquinone, catechol, 4-t-butylcatechol, 4,6-di-t-butylcatechol, benzoquinone, 2,3,5,6-tetrachloro-1,4-benzoquinone, methylbenzoquinone, 2,6-dimethylbenzoquinone, napthoquinone, 1-oxyl-2,2,6,6-tetramethylpiperidine, 1-oxyl-2,2,6,6-tetramethylpiperidine-4-ol (a compound also referred to as TEMPOL), 1-oxyl-2,2,6,6-tetramethylpiperidine-4-one (a compound also referred to as TEMPON), 1-oxyl-2,2,6,6-tetramethyl-4-carboxyl-piperidine (a compound also referred to as 4-carboxy-TEMPO), 1-oxyl-2,2,5,5-tetramethylpyrrolidine, 1-oxyl-2,2,5,5-tetramethyl-3-carboxylpyrrolidine (also called 3-carboxy-PROXYL), aluminium-N-nitrosophenyl hydroxylamine, diethylhydroxylamine, phenothiazine and/or derivatives or combinations of any of these compounds.

Advantageously, the amount of radical inhibitor in the resin composition is in the range of from 0,0001 to 10 % by weight, calculated on the total weight of the primary resin system of the resin composition. More preferably, the amount of inhibitor in the resin composition is in the range of from 0,001 to 1 % by weight.

In specifically preferred embodiments of the invention the two-component composition is essentially free of cobalt. Essentially free of cobalt means that the cobalt concentration is lower than 0,01 mmol Co per kg primary resin system, preferably lower than 0,001 mmol Co per kg primary resin system. Most preferably the two-component composition is free of cobalt.

Preferably, the resin composition of the two-component composition of the present invention does not contain LiCl. More preferably, the two-component composition of the present invention does not contain LiCl.

The two-component composition according to the present invention can be applied in all applications as are usual for such types of resins. In particular they can suitably used in closed mould applications, but they also can be applied in open mould applications. For closed mould applications it is especially important that the manufacturer of the closed mould products reliably can use the favorable (i.e. reduced) gel-time drift tendency of the resin compositions according to the invention. End segments where the unsaturated polyester resin or vinyl ester resin compositions according to the present invention can be applied are also marine applications, chemical anchoring, roofing, construction, relining, pipes & tanks, flooring, windmill blades, etc. That is to say, the two-component compositions according to the invention can be used in all known uses of unsaturated polyester resins and vinyl ester resins.

The present invention further also relates to all such objects or structural parts as are being obtained when curing the two-component compositions according to the invention. These objects and structural parts have excellent

mechanical properties.

The present invention also relates to a process for radically curing the two-component composition according to the invention. It has surprisingly been found that the combination of the manganese compound and the thiol-containing compound accelerates the radically curing of the unsaturated polyester or vinyl ester with the peroxide. The curing is preferably effected at a temperature in the range of from -20 to +200 °C, preferably in the range of from -20 to +100 °C, and most preferably in the range of from -10 to +60 °C (so-called cold curing). In a preferred embodiment the curing is effected essentially free of cobalt.

The invention is now demonstrated by means of a series of examples and comparative examples. All examples are supportive of the scope of claims. The invention, however, is not restricted to the specific embodiments as shown in the examples.

Experimental part

The resins used for curing are commercially available products and in addition thereto also a resin -hereinafter referred to as Resin A- was specifically prepared on behalf of the inventors for being used in the tests.

Preparation of Resin A

184,8 g of propylene glycol (PG), 135,8 g of diethylene glycol (DEG), 216,1 g of phthalic anhydride (PAN), 172,8 g of maleic anhydride (MAN), and 0.075 g 2-t-butylhydroquinone were charged in a vessel equipped with a reflux condenser, a temperature measurement device and inert gas inlet. The mixture was heated slowly by usual methods to 205 °C. At 205 °C the mixture was kept under reduced pressure until the acid value reached a value below 16 mg KOH/g resin and the falling ball viscosity at 100 °C was below 50 dPa.s. Then the vacuum was relieved with inert gas, and the mixture was cooled down to 130 °C, and thereafter the solid UP resin so obtained was transferred to a mixture of 355 g of styrene and 0,07 g of mono-t-butylhydroquinone and was dissolved at a temperature below 80 °C. The final resin viscosity reached at 23 °C was 640 mPa.s, and the Non Volatile Matter content was 64,5 wt.%.

Monitoring of curing

In most of the Examples and Comparative Examples presented hereinafter it is mentioned, that curing was monitored by means of standard gel time equipment. This is intended to mean that both the gel time ($T_{gel}$ or $T_{25\text{->}35°C}$) and peak time ($T_{peak}$ or $T_{25\text{->}peak}$) were determined by exotherm measurements according to the method of DIN 16945 when curing the resin with the peroxides as indicated in the Examples and Comparative Examples. The equipment used therefore was a Soform gel timer, with a Peakpro software package and National Instruments hardware; the waterbath and thermostat used were respectively Haake W26, and Haake DL30.

For some of the Examples and Comparative Examples also the gel-time drift (Gtd) was calculated. This was done on the basis of the gel times determined at different dates of curing according to formula 1:

$$Gtd = (T_{25\text{->}35°C\text{ at y-days}} - T_{25\text{->}35°C\text{ after mixing}}) / T_{25\text{->}35°C\text{ after mixing}} \times 100\% \quad \text{(formula 1)}$$

with "y" indicating the number of days after mixing.

Examples 1a-b and Comparative Experiment A

Formulations for the A component were prepared as follows: to a mixture of 90g resin A 10 g styrene and 0,3g Mn ethylhexanoate solution (6% Mn, 3 mmol Mn/kg primary resin) was added nothing (Comp. Exp. A), 0,5g pentaerythritol tetrakis(3-mercapto propionate) (4-SH; commercially available from Bruno Bock Chemische Fabrik GmbH & Co.)) (example 1a) and 0,5 g 4-SH together with 1g K octanoate in PEG (15%) (example 1b). Curing was performed at 25°C using 3% (relative to primary resin system) Butanox M-50 (a MEK peroxide solution, commercially available from Akzo Nobel Chemicals Inc.)as the B component and the curing was monitored using the gel timer. The results are shown in table 1.

Table 1

| | | gel time (min) | peak time (min) | temp (°C) |
|---|---|---|---|---|
| Comp. Exp. A | Mn | >1200 | | |
| Example 1a | Mn+ 4-SH | 26,6 | 60 | 107 |
| Example 1b | Mn+ 4-SH +base | 10,3 | 17,9 | 172 |

These results clearly demonstrate that for an efficient curing, i.e. short gel time, short peak time and/or high peak temperature, both manganese as well as thiol needs to be present. Furthermore these results indicate that the addition of a base can further accelerate the curing.

Examples 2a-2ac

Formulations for the A component were prepared as follows: to a mixture of 36 g resin A and 4g styrene was added x g Mn ethylhexanoate solution (6% Mn), y g pentaerythritol tetrakis(3-mercaptopropionate) (4-SH) and z g K octanoate solution in PEG (15%). Curing was performed with 1,2 g Butanox M-50 (3%, relative to primary resin system) as the B component and monitored in the gel timer. The results are shown in table 2.

Table 2

| Example | x g Mn | y g 4-SH | Z g base | gel time (min) | peak time (min) | temp (°C) |
|---|---|---|---|---|---|---|
| 2a | 0,007 | 0,04 | | 5,4 | 11,4 | 48 |
| 2b | 0,007 | 0,1 | | 6,6 | 13 | 74 |
| 2c | 0,007 | 0,2 | | 8,3 | 15,4 | 171 |
| 2d | 0,007 | 0,4 | | 8,8 | 14,3 | 166 |
| 2e | 0,007 | 0,02 | 0,4 | 62,8 | 90,4 | 133 |
| 2f | 0,007 | 0,04 | 0,4 | 27,9 | 63,7 | 135 |
| 2g | 0,007 | 0,1 | 0,4 | 4,6 | 25,8 | 144 |
| 2h | 0,007 | 0,2 | 0,4 | 3,9 | 16,5 | 162 |
| 2i | 0,007 | 0,4 | 0,4 | 3,9 | 12,1 | 159 |
| 2j | 0,041 | 0,1 | | 43 | 71 | 48 |
| 2k | 0,041 | 0,2 | | 36 | 71 | 103 |
| 2l | 0,041 | 0,4 | | 33 | 59 | 112 |
| 2m | 0,041 | 0,008 | 0,4 | 137 | 147 | 174 |
| 2n | 0,041 | 0,02 | 0,4 | 119 | 132 | 169 |
| 2o | 0,041 | 0,04 | 0,4 | 26 | 34 | 183 |
| 2p | 0,041 | 0,1 | 0,4 | 21 | 33 | 180 |
| 2q | 0,041 | 0,2 | 0,4 | 10 | 18 | 172 |
| 2r | 0,041 | 0,4 | 0,4 | 8 | 15 | 160 |
| 2s | 0,041 | 0,8 | 0,4 | 7 | 15 | 143 |
| 2t | 0,041 | 0,2 | 0,6 | 4 | 12 | 177 |
| 2u | 0,041 | 0,2 | 0,8 | 4 | 11 | 173 |
| 2v | 0,041 | 0,2 | 2 | 3 | 7 | 45 |
| 2w | 0,137 | 0,004 | | 85 | 105 | 147 |
| 2x | 0,137 | 0,1 | | 29 | 49 | 145 |
| 2y | 0,137 | 0,2 | | 18 | 40 | 138 |

(continued)

| Example | x g Mn | y g 4-SH | Z g base | gel time (min) | peak time (min) | temp (°C) |
|---|---|---|---|---|---|---|
| 2z | 0,137 | 0,004 | 0,4 | 32 | 40 | 187 |
| 2aa | 0,137 | 0,1 | 0,4 | 16 | 21 | 187 |
| 2ab | 0,137 | 0,2 | 0,4 | 6,7 | 12 | 171 |
| 2ac | 0,137 | 0,4 | 0,4 | 4,8 | 9 | 164 |

These examples demonstrate that various amounts of manganese and thiol can be used according to the invention. The amounts can be used to tune the cure profile. These examples further illustrate that even with 0,2 mmol/kg Mn a good curing can be obtained using around 0,5% thiol. Adding a base enhances the reactivity and using 0,2 mmol Mn together with only 0,05% thiol in combination with a base already yields a good curing.

Examples 3a-3e

Formulations were prepared using 90 g resin , 10 g styrene, 0,5g pentaerythritol tetrakis(3-mercapto propionate) (4-SH), 1g K-octanoate solution and 0,28g Mn solution as the A component. The resin used in examples 3b-3e is commercially available from DSM Composite Resins, Schaffhausen, Switzerland. Curing was performed with 3 g Butanox M-50 as the B component and monitored with the geltimer. The results are shown in table 3.

Table 3

| Example | Resin | gel time (min) | peak time (min) | temp (°C) |
|---|---|---|---|---|
| 3a | A | 7 | 12 | 171 |
| 3b | Palatal P 4-01 | 22 | 38 | 139 |
| 3c | Palatal P 5-01 | 19 | 26 | 53 |
| 3d | Palatal P 69-02 | 7 | 17 | 162 |
| 3e | Synolite 8388-N-1 | 2 | 7 | 161 |
| These results indicate that various resins can be used. | | | | |

Example 4a

Formulations for the A component were prepared as follows: to a formulation of 100g Daron XP 45-A-2 (commercially available from DSM Composite Resins, Schaffhausen, Switzerland), 0,5g pentaerythritol tetrakis(3-mercapto propionate) (4-SH), 0,008g t-butyl cathechol and 0,28g Mn solution was added. Curing was performed with 3g Butanox M-50 as B component and the curing was monitored with the geltimer resulting in Tgel= 13 min, Tpeak = 24 min and Temp =151.

Example 4b

Formulations for the A component were prepared as follows: to a formulation of 100g Atlac 590 (commercially available from DSM Composite Resins, Schaffhausen, Switzerland), 0,5g pentaerythritol tetrakis(3-mercapto propionate) (4-SH), 0.5g acetylacetone, 0,023g t-butyl cathechol and 0,20g Mn solution (10% Mn) was added. Curing was performed with 1g Butanox M-50 as B component and the curing was monitored with the geltimer resulting in Tgel= 16 min, Tpeak = 33 min and Temp =133.

This result indicates that vinyl esters can also be cured with the system according to the invention. This result also indicates that radical inhibitors can be used.

Examples 5

A formulation of 180g resin A, 20g styrene, 1g pentaerythritol tetrakis(3-mercapto propionate) (4-SH), 0,016 g t-butylcatechol and 0,52g Mn solution (6% Mn) was prepared as A component and dived in 2 portions of 100g each. The first was cured immediately with 3g Butanox M- 50 as B component resulting in a gel time of 44 min. The second

was cured after 184 days storage resulting in a gel time of 39 min meaning a gel time drift of only -11%

For comparison the gel time drift of resin A using the same amount of cobalt instead of manganese, however without thiol and the same amount of inhibitors was 119% after 106 days.

Example 6

Example 5 was repeated using Palatal P 6-01 (commercially available from DSM Composite Resins, Schaffhausen, Switzerland) instead on resin A. The gel time drift after 184 days was -15% For comparison the gel time drift of Palatal P 6-01 using the same amount of cobalt instead of manganese, however without thiol, and the same amount of inhibitors was 335% after 106 days.

The results of example 5 and 6 indicate that low drifting formulations can be prepared with the cure system according to the invention.

Example 7a

Example 2l was repeated using Cyclonox LE 50 (commercially available from Akzo Nobel Inc.) instead of Butanox M-50.

The cure results are Tgel=9,2 min, Tpeak=16,5 min, Peaktemp=144°C. This result indicates that various peroxides can be used.

Example 7b

A formulation of 100g Atlac 430 (vinyl ester resin from DSM Composite Resins, Schaffhausen, Switzerland), 0,30 g Nuodex Mn (10% Mn in spirits, commercially available from Elementis) and 0,52 g 4-SH was stirred for 5 minutes. Next 2 g Trigonox 239 (commercially available from Akzo Nobel Inc.) was added and the cure was monitored in the geltimer. The cure results are Tgel=13.3 min, Tpeak=23.4 min, Peaktemp=140°C. These results indicate that various peroxides and various resins can be used.

Example 7c

A formulation of 100g Palatal D922 (a urethane vinyl ester resin from DSM Composite Resins, Schaffhausen, Switzerland), 1,00 g Nuodex Mn (10% Mn in spirits, commercially available from Elementis), 300ppm TEMPOL and 2,0g 4-SH was stirred for 5 minutes. Next 2 g Trigonox AW-70 (commercially available from Akzo Nobel Inc.) was added and the cure was monitored in the geltimer. The cure results are Tgel=10.2 min, Tpeak=13 min, Peaktemp=171°C. These results indicate that various peroxides and various resins can be used.

Example 8

Formulations for the A component were prepared based on 36g resin A, 4 g styrene, 0,036g Mn ethylhexanoate (6% Mn in spirits), 0,05g penta erythritol tetramercapto propionate and 16 mmol base/ kg primary resin of various bases. After stirring for 5 min curing was performed using 1,2 g Butanox M-50 as the B component and the curing was monitored with the geltimer. The results are shown in table 4.

Table 4

| ex | base | gel time (min) | peak time (min) | temp (°C) |
|---|---|---|---|---|
| 8a | DMEA | 34.5 | 57.6 | 136 |
| 8b | DBU | 28 | 43.2 | 163 |
| DMEA=N,N-dimethyl ethanol amine<br>DBU= 1,8-diazabicyclo[5.4.0] undec-7-ene | | | | |

These results indicate that organic bases can be used according to the invention

Example 9a-h and Comparative Experiment B

Formulations for the A component were prepared using 100g Palatal P 69-02 (from DSM Composite Resins,

Schaffhausen, Switzerland), w g Nuodex Mn10 (10%Mn solution), x g 4-SH, and y g acetylaceton. Curing was performed using z g Butanox M-50 as the B component and monitored in the gel timer. Next to the gel timer a 2 mm plate was poured down in an open alumina cup in order to access the tack manually (0=bad, 5=tack free) and the barcol hardness after 7 days at room temperature of both bottom (B bot) and top layer (B top). Barcol hardness was measured according to DIN EN 59. The results are shown in table 5.

Table 5

| | g Mn | g 4-SH | g acac | g M50 | Tgel | Tpeak | temp | tack | B top | B bot |
|---|---|---|---|---|---|---|---|---|---|---|
| Ex.9a | 0,2167 | 0,5081 | 0,5071 | 1,53 | 25 | 42 | 129 | 4 | 16 | 30 |
| Ex.9b | 0,3263 | 0,9145 | 0,9035 | 1 | 21 | 34 | 114 | 5 | 5 | 10 |
| Ex.9c | 0,3225 | 0,9121 | 0,1106 | 2,05 | 7 | 15 | 141 | 4 | 9 | 29 |
| Ex.9d | 0,3289 | 0,9063 | 0,9128 | 2 | 16 | 26 | 142 | 5 | 12 | 20 |
| Ex.9e | 0,3204 | 0,4999 | 0,5003 | 1,51 | 22 | 34 | 139 | 3 | 13 | 28 |
| Ex.9f | 0,2004 | 0,5209 | 0,9005 | 1,5 | 35 | 50 | 134 | 3 | 10 | 27 |
| Ex.9g | 0,2007 | 0,1117 | 0,5013 | 1,5 | 71 | 98 | 112 | 2 | 15 | 32 |
| Ex.9h | 0,099 | 0,8979 | 0,9083 | 2,02 | 21 | 40 | 127 | 3 | 7 | 25 |
| Comp. Exp B | Co 0,0869 (10% Co solution) | | | 1 | 25 | 40 | 148 | 3 | 8 | 20 |

From this table it can be concluded that 1,3-dioxo compounds can accelerate a Mn-thiol curing system according to the invention. As indicated in table 5 the system according to the invention can be used to obtain tack free surfaces. Moreover the through cure as indicated by the barcol hardness of the bottom is in many cases considerably improved compared to the cobalt based reference system.

It should be noted that in all the examples according to the invention almost colourless objects were obtained, while as using the reference cobalt pink objects were obtained.

Examples 10a-d and Comparative Experiment C

Cured objects (castings) were prepared by casting 500 g of a resin composition between borosilicate glass plates that was separated with a 4mm EPDM U-shaped rim. The resin composition was based on 500g resin A according to the formulations described below as the A component and cured with Butanox M-50 as the B component, all amounts are in grams. The castings were released and post cured during 24hrs at 60°C and 24hrs at 80°C. Mechanical properties of the cured objects were determined according to ISO 527-2. The Heat Distortion Temperature (HDT) was measured according to ISO 75-Ae. Barcol hardness was measured according to DIN EN 59. Of these formulations residual styrene contents were measured by gaschromatography using GC-FID (Gas Chromatography with a Flame Ionization Detector), using butylbenzene as an internal standard, after extraction of the cured objects in dichloromethane for 48 hrs.

Table 6

| | 10a | 10b | 10c | 10d | Comp. Exp C (Co) |
|---|---|---|---|---|---|
| A component | | | | | |
| resin A | 500 | 500 | 500 | 500 | |
| Nuodex Mn10 (10%Mn solution) | 1 | 0,27 | 1,5 | 1 | |
| Co | | | | | 0,29 |
| 4-SH | 2,5 | 0,5 | 0,5 | 2,5 | |
| K-oct (10% K) | | 5 | | | |
| acetylacetone | | | 0,5 | 2,5 | |
| t-Bu catechol | 0,03 | 0,03 | | | 0,1 |

(continued)

| | 10a | 10b | 10c | 10d | Comp. Exp C (Co) |
|---|---|---|---|---|---|
| | | | | | |
| B component | | | | | |
| Butanox M-50 | 10 | 10 | 10 | 10 | 10 |
| | | | | | |
| HDT (°C) | 70 | 70 | 71 | 68 | 70 |
| Tens (MPa) | 75 | 52 | 82 | 49 | 68 |
| Emod (GPa) | 3,7 | 3,7 | 3,7 | 3,6 | 3,7 |
| Elong at bBreak (%) | 3 | 1,6 | 3,4 | 1,5 | 2,1 |
| rest styrene | <0,1 | <0,1 | <0,1 | <0,1 | <0,1 |
| Barcol | 42 | 43 | 45 | 44 | 44 |
| Color | almost colorless | almost colorless | almost colorless | almost colorless | Pink |

These results indicate that almost colorless construction materials can be prepared using one of the Mn-thiol systems according to the invention

Example 11 and Comparative Experiment D

Cured objects (castings) were prepared by casting 500 g of a resin composition between borosilicate glass plates that was separated with a 2mm EPDM U-shaped rim. The resin composition was based on 500g Palatal P 69-02 (from DSM Composite Resins, Schaffhausen, Switzerland) as the A component, and cured according to the formulations described below, all amounts are in grams. No post-curing was applied. Of these formulations residual styrene contents were measured by gaschromatography using GC-FID (Gas Chromatography with a Flame Ionization Detector), using butylbenzene as an internal standard, after extraction of the cured objects in dichloromethane for 48 hrs.

Table 7

| | 11a | 11b | comp D |
|---|---|---|---|
| A component | | | |
| Resin | 500 | 500 | 500 |
| Co (6% solution) | | | 0,44 |
| Nuodex Mn 10 (10% solution) | 1 | 1,5 | |
| 4-SH | 2,5 | 0,5 | |
| Acetyl acetone | 2,5 | 4,5 | |
| | | | |
| B component | | | |
| Butanox M-50 | 10 | 5 | 5,05 |
| | | | |
| rest styrene (%) | 1,8 | 1,1 | 3 |

These experiments clearly demonstrate that surprisingly cured objects with good mechanical properties and lower amounts of residual styrene can be obtained with the cure system according to the invention. Furthermore these results indicate that 1,3 dioxo compounds like acetylaceton can be used in combination with the cure system according

to the invention.

Examples 12a-d and Comparative Experiments E-F

Cured objects (castings) were prepared by casting 500 g of the initiated resin composition (see table below in which all amounts are in gram) between borosilicate glass plates that was separated with a 4mm EPDM U-shaped rim. After 24 hrs at 20°C the casting was post-cured for 16 hours at 40°C. Mechanical properties of the cured objects were determined according to ISO 527-2. The Heat Distortion Temperature (HDT) was measured according to ISO 75-Ae. Residual styrene and benzaldehyde contents were measured by gaschromatography using GC-FID (Gas Chromatography with a Flame Ionization Detector), using butylbenzene as an internal standard, after extraction of the cured objects in dichloromethane for 48 hrs.

Table 8

| | 12a | 12b | Comp. Exp. E | 12c | 12d | Comp. Exp. F |
|---|---|---|---|---|---|---|
| Resin | Palatal P4-01 | Palatal P4-01 | Palatal P4-01 | Synolite 8388-N-1 | Synolite 8388-N-1 | Synolite 8388-N-1 |
| Co solution (10% Co -2-ethylhexanoate; commercially available from Elementis) | | | 0,27 | | | 0,27 |
| Nuodex Mn-10 (10% Mn, commercially available from | 2,17 | 1,63 | | 2,07 | 1,55 | |
| 4-SH | 2,61 | 1,01 | | 2,58 | 0,96 | |
| K solution (10% K) | 2,55 | 5,15 | | 2,87 | 5,05 | |
| Butanox M50 | 10 | 10 | 10 | 10 | 10 | 10 |
| | | | | | | |
| HDT (°C) | 53,2 | 56,1 | 53,5 | 66 | 66,4 | 62 |
| Tens Str M Pa | 58 | 65 | 70 | 47 | 65 | 63 |
| E-mod MPa | 4001 | 3968 | 4077 | 3641 | 3913 | 3645 |
| E at break (%) | 1,7 | 1,9 | 2,0 | 1,3 | 1,9 | 2,1 |
| Residual styrene (%) | 1,0 | 0,4 | 1,2 | 1,0 | 0,3 | 1,75 |
| Residual benzaldehyde (%) | 0,025 | 0,03 | 0,07 | 0,03 | 0,02 | 0,07 |

These results clearly indicate that castings can be prepared with comparable mechanical properties and surprisingly lower rest styrene and rest benzaldehyde amounts. This is advantageous in view of lower emissions of these compounds to the environment.

## Claims

1. Two-component composition comprising a first component and a second component, wherein the first component being a resin composition comprising an unsaturated polyester resin or vinyl ester resin, a manganese compound and a thiol-containing compound, and the molar ratio between the manganese and the thiol groups of the thiol-containing compound is from 4:1 to 1:1500, and the second component comprises a peroxide compound having formula ROOH, in which R is hydrogen or an optionally substituted alkyl group.

2. Two-component composition according to claim 1, **characterized in that** the manganese compound is a manganese carboxylate or a manganese acetoacetate.

3. Two-component composition according to anyone of claims 1-2, **characterized in that** the thiol in the thiol-containing compound of the resin composition is an aliphatic thiol.

4. Two-component composition according to claim 3, **characterized in that** the aliphatic thiol is a $\alpha$-mercapto acetate or $\beta$-mercapto propionate, or a derivative or mixture thereof.

5. Two-component composition according to any one of claims 1-4, **characterized in that** the thiol-functionality of the thiol-containing compound in the resin composition is $\geq 2$, more preferably $\geq 3$.

6. Two-component composition according to anyone of claims 1-5, **characterized in that** the amount of the thiol-containing compound is between 0,01 and 10 % by weight, calculated on the total weight of the primary resin system of the resin composition.

7. Two-component composition according to anyone of claims 1-6, **characterized in that** the resin composition also comprises a base.

8. Two-component composition according to claim 7, **characterized in that** the base is an organic base with $pK_a \geq 10$ or the base is an alkaline metal or earth alkaline metal compound.

9. Two-component composition according to claim 8, **characterized in that** the organic base with $pK_a \geq 10$ is a nitrogen containing compound, preferably an amine, more preferably a tertiary amine.

10. Two-component composition according to claim 9, **characterized in that** the base is an alkaline metal or earth alkaline metal compound, preferably a potassium carboxylate.

11. Two-component composition according to any of claims 1-10, **characterized in that** the resin composition does not contain LiCl.

12. Two-component composition according to any of claims 1-11, **characterized in that** the resin composition is essentially free of cobalt.

13. Process for radically curing a resin composition, **characterized in that** the curing is performed starting from a two-component composition according to any one of claims 1-12.

14. Cured objects or structural parts obtained from a two component composition according to any of claims 1-12.

**Patentansprüche**

1. Zweikomponentige Zusammensetzung mit einer ersten Komponente und einer zweiten Komponente, wobei es sich bei der ersten Komponente um eine ein ungesättigtes Polyesterharz oder Vinylesterharz, eine Manganverbindung und eine thiolhaltige Verbindung umfassende Harzzusammensetzung handelt und das Molverhältnis zwischen dem Mangan und den Thiolgruppen der thiolhaltigen Verbindung 4:1 bis 1:1500 beträgt, und die zweite Komponente eine Peroxidverbindung mit der Formel ROOH, worin R für Wasserstoff oder eine gegebenenfalls substituierte Alkylgruppe steht, umfaßt.

2. Zweikomponentige Zusammensetzung nach Anspruch 1, **dadurch gekennzeichnet, daß** es sich bei der Manganverbindung um ein Mangancarboxylat oder ein Manganacetoacetat handelt.

3. Zweikomponentige Zusammensetzung nach einem der Ansprüche 1-2, **dadurch gekennzeichnet, daß** es sich bei dem Thiol in der thiolhaltigen Verbindung der Harzzusammensetzung um ein aliphatisches Thiol handelt.

4. Zweikomponentige Zusammensetzung nach Anspruch 3, **dadurch gekennzeichnet, daß** es sich bei dem aliphatischen Thiol um ein α-Mercaptoacetat oder β-Mercaptopropionat oder ein Derivat oder eine Mischung davon handelt.

5. Zweikomponentige Zusammensetzung nach einem der Ansprüche 1-4, **dadurch gekennzeichnet, daß** die Thiolfunktionalität der thiolhaltigen Verbindung in der Harzzusammensetzung ≥ 2 und weiter bevorzugt ≥ 3 ist.

6. Zweikomponentige Zusammensetzung nach einem der Ansprüche 1-5, **dadurch gekennzeichnet, daß** die Menge der thiolhaltigen Verbindung zwischen 0,01 und 10 Gew.-%, bezogen auf das Gesamtgewicht des primären Harzsystems der Harzzusammensetzung, liegt.

7. Zweikomponentige Zusammensetzung nach einem der Ansprüche 1-6, **dadurch gekennzeichnet, daß** die Harzzusammensetzung außerdem auch noch eine Base umfaßt.

8. Zweikomponentige Zusammensetzung nach Anspruch 7, **dadurch gekennzeichnet, daß** es sich bei der Base um eine organische Base mit $pK_a$ ≥ 10 oder um eine Alkalimetall- oder Erdalkalimetallverbindung handelt.

9. Zweikomponentige Zusammensetzung nach Anspruch 8, **dadurch gekennzeichnet, daß** es sich bei der organischen Base mit $pK_a$ ≥ 10 um eine stickstoffhaltige Verbindung, vorzugsweise ein Amin und weiter bevorzugt ein tertiäres Amin handelt.

10. Zweikomponentige Zusammensetzung nach Anspruch 9, **dadurch gekennzeichnet, daß** es sich bei der Base um eine Alkalimetall- oder Erdalkalimetallverbindung und vorzugsweise ein Kaliumcarboxylat handelt.

11. Zweikomponentige Zusammensetzung nach einem der Ansprüche 1-10, **dadurch gekennzeichnet, daß** die Harzzusammensetzung kein LiCl enthält.

12. Zweikomponentige Zusammensetzung nach einem der Ansprüche 1-11, **dadurch gekennzeichnet, daß** die Harzzusammensetzung im wesentlichen frei von Cobalt ist.

13. Verfahren zur radikalischen Härtung einer Harzzusammensetzung, **dadurch gekennzeichnet, daß** die Härtung ausgehend von einer zweikomponentigen Zusammensetzung nach einem der Ansprüche 1-12 durchgeführt wird.

14. Gehärtete Gegenstände oder Bauteile, erhalten aus einer zweikomponentigen Zusammensetzung nach einem der Ansprüche 1-12.

## Revendications

1. Composition à deux composants comprenant un premier composant et un deuxième composant, le premier composant étant une composition de résine comprenant une résine de polyester insaturée ou une résine d'ester vinylique insaturée, un composé de manganèse et un composé thiol, et le rapport molaire entre le manganèse et les groupements thiol du composé thiol étant de 4:1 à 1:1500, et le deuxième composant comprenant un composé de peroxyde ayant la formule ROOH, dans laquelle R est hydrogène ou un groupement alkyle éventuellement substitué.

2. Composition à deux composants selon la revendication 1, **caractérisée en ce que** le composé de manganèse est un carboxylate de manganèse ou un acétoacétate de manganèse.

3. Composition à deux composants selon l'une ou l'autre des revendications 1 et 2, **caractérisée en ce que** le thiol dans le composé thiol de la composition de résine est un thiol aliphatique.

4. Composition à deux composants selon la revendication 3, **caractérisée en ce que** le thiol aliphatique est un α-mercapto-acétate ou β-mercapto-propionate, ou un dérivé ou un mélange de ceux-ci.

5. Composition à deux composants selon l'une quelconque des revendications 1 à 4, **caractérisée en ce que** la fonctionnalité thiol du composé thiol dans la composition de résine est ≥ 2, plus préférablement ≥ 3.

6. Composition à deux composants selon l'une quelconque des revendications 1 à 5, **caractérisée en ce que** la quantité de composé thiol est comprise entre 0,01 et 10 % en poids, calculée sur le poids total du système de résine

primaire de la composition de résine.

**7.** Composition à deux composants selon l'une quelconque des revendications 1 à 6, **caractérisée en ce que** la composition de résine comprend également une base.

**8.** Composition à deux composants selon la revendication 7, **caractérisée en ce que** la base est une base organique ayant un $pK_a \geq 10$ ou la base est un composé de métal alcalin ou de métal alcalino-terreux.

**9.** Composition à deux composants selon la revendication 8, **caractérisée en ce que** la base organique ayant un $pK_a \geq 10$ est un composé azoté, de préférence une amine, plus préférablement une amine tertiaire.

**10.** Composition à deux composants selon la revendication 9, **caractérisée en ce que** la base est un composé de métal alcalin ou de métal alcalino-terreux, de préférence un carboxylate de potassium.

**11.** Composition à deux composants selon l'une quelconque des revendications 1 à 10, **caractérisée en ce que** la composition de résine ne contient pas de LiCl.

**12.** Composition à deux composants selon l'une quelconque des revendications 1 à 11, **caractérisée en ce que** la composition de résine est essentiellement dépourvue de cobalt.

**13.** Procédé de durcissement radicalaire d'une composition de résine, **caractérisé en ce que** le durcissement est réalisé en partant d'une composition à deux composants selon l'une quelconque des revendications 1 à 12.

**14.** Objets durcis ou pièces de construction obtenus à partir d'une composition à deux composants selon l'une quelconque des revendications 1 à 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5235010 A
- US 4429092 A


### Non-patent literature cited in the description


- **W. D. Cook et al.** *Polym. Int.,* 2001, vol. 50, 129-134
- **M. Malik et al.** *J.M.S. - Rev. Macromol. Chem. Phys.,* 2000, vol. C40 (2, 3), 139-165